# EUROPÄISCHE PATENTSCHRIFT

(11) **EP 3 142 794 B1**
(45) Veröffentlichungstag und Bekanntmachung des Hinweises auf die Patenterteilung: **14.02.2018**
(21) Anmeldenummer: 15744560.2
(22) Anmeldetag: 30.07.2015
(51) Int. Cl.: B02C 4/42, B02C 4/02

(54) **ANTRIEBSANORDNUNG FÜR EINEN WALZENBRECHER**
DRIVE ASSEMBLY FOR A ROLL CRUSHER
AGENCEMENT D'ENTRAÎNEMENT POUR UN BROYEUR GIRATOIRE

(30) Priorität: 05.08.2014 EP 14179796
(43) Veröffentlichungstag der Anmeldung: 22.03.2017
(73) Patentinhaber: Flender GmbH, 46395 Bocholt (DE)
(72) Erfinder: POHLING, Dietmar, 01326 Dresden (DE); FENNIS, Ronald, 7104 AS Winterswijk (NL)
(74) Vertreter: Maier, Daniel Oliver
(86) Internationale Anmeldenummer: PCT/EP2015/067452
(87) Internationale Veröffentlichungsnummer: WO 2016/020246

(56) Entgegenhaltungen:
- EP-A1- 1 593 435
- WO-A1-2013/160220
- CN-Y- 201 200 902
- DE-A1-102011 106 123

## Beschreibung

Die vorliegende Erfindung betrifft eine Antriebsanordnung für einen Walzenbrecher.

Es sind Walzenbrecher bekannt, die grobstückiges Material, z.B. Gestein oder Kohle, mithilfe von zumeist zwei sich gegenläufig drehenden Zahnwalzen zerkleinern, zwischen die das zu brechende Material aufgegeben wird. Durch eine synchronisierte Drehung der Walzen wird der Zerkleinerungsvorgang durch ständig wiederkehrende, aufeinander zulaufende Bewegungen der Zahnwalzen bewirkt, so dass ein definierter Zerkleinerungsgrad erreicht werden kann. Auch die Effektivität des Zerkleinerungsvorgangs ist von der synchronisierten Drehung der Walzen abhängig.

CN 201200902 Y (Guizhou Lailisi Machinery Design and Manufacturing Co., Ltd.) 2009-03-04 beschreibt einen Walzenbrecher mit zwei Walzen 13 und zwei unabhängigen Antrieben, jeweils bestehend aus einem Motor 1, einer Fluidkupplung 2 und einem Getriebe 3. Zwischen den beiden Getrieben 3 und den Walzen 13 ist zur Synchronisierung der Rotation der beiden Walzen ein gemeinsames Synchronisierungsgetriebe 10 angeordnet.

EP 1 593 435 A1 (Bondioli, Edi) 09.11.2005, die als nächstliegender Stand der Technik betrachtet wird, offenbart eine Antriebsanordnung gemäß dem Oberbegriff von Anspruch 1.

Bei Inbetriebnahme eines Walzenbrechers muss in vielen Fällen eine, gegebenenfalls auch wiederholte, Änderung der Winkellage der Walzen zueinander vorgenommen werden, bis die Körnigkeit des gebrochenen Materials den Anforderungen entspricht. Auch kann bei einer Änderung der Eigenschaften des Bruchmaterials eine Neujustierung der Winkellage nötig werden.

Es ist Aufgabe der vorliegenden Erfindung, die Justierung der Winkellage der Walzen eines Walzenbrechers zu vereinfachen.

Diese Aufgabe wird erfindungsgemäß durch eine Antriebsanordnung für einen Walzenbrecher mit den in Anspruch 1 angegebenen Merkmalen gelöst. Diese Aufgabe wird erfindungsgemäß au-βerdem durch ein Verfahren mit den in Anspruch 7 angegebenen Merkmalen gelöst.

Die Antriebsanordnung ist für einen Walzenbrecher mit zwei parallel angeordneten Walzen, die auch als Brecherwellen bezeichnet werden, geeignet. Die Antriebsanordnung umfasst zwei Antriebsstränge zum Antrieb je einer Walze. Die Antriebsstränge weisen jeweils ein Zahnradgetriebe auf, welches eine mit einem Motor verbindbare Antriebswelle und eine mit einer Walze verbindbare Abtriebswelle umfasst. Die Zahnradgetriebe weisen jeweils eine zwischen der Antriebswelle und der Abtriebswelle angeordnete Zwischenwelle auf. Die Zwischenwellen der Zahnradgetriebe sind mit einer schlupffreien Drehmomentübertragungsvorrichtung, welche einen Versatz der Zahnradgetriebe zueinander erlaubt, in Kombination mit einer Überlastkupplung, welche bei Überschreitung eines einstellbaren Drehmoments die drehfeste Verbindung der Zwischenwellen unterbricht, miteinander verbunden.

Das Verfahren dient dem Synchronisieren einer Walzenrotation eines Walzenbrechers mit zwei parallel angeordneten Walzen und einer erfindungsgemäßen Antriebsanordnung, wie oben beschrieben. Das Verfahren weist dabei folgende Schritte auf: Lösen der drehfesten Verbindung der Zwischenwellen; Drehen mindestens einer der Zwischenwellen, bis eine definierte Winkellage der Walzen erreicht ist; und Wiederherstellen der drehfesten Verbindung der Zwischenwellen.

Die Zahnradgetriebe, die im Gegensatz zu Keilriemenübersetzungen oder zu Reibradgetrieben eine schlupflose Übertragung ermöglichen, übersetzen die Drehzahl der durch Motoren antreibbaren Antriebswellen (schnelle Getriebeseite) in eine geringere Drehzahl der Abtriebswellen (langsame Getriebeseite). Der Erfindung liegt nun die Idee zugrunde, die Justierung der Winkellage, d.h. die Synchronisierung, der Walzen, auf der schnell drehenden, gut zugänglichen Seite der Getriebe vorzusehen, nicht auf der langsam drehenden Getriebeseite, wie es im Stand der Technik praktiziert wird. Walzenbrecher, deren Walzen auf der langsam drehenden Getriebeseite synchronisiert sind, werden auch als langsam laufend synchronisierte Walzenbrecher bezeichnet.

Eine nachträgliche Einstellung der Winkellage der Brecherwellen zueinander ist an einem langsam laufend synchronisierten Walzenbrecher nur mit sehr hohem Aufwand möglich. Der hohe Aufwand entsteht hier infolge der sehr schweren Zahnräder, mit denen die Synchronisation direkt an den Brecherwellen erfolgt. Zur Veränderung der Winkellage der Brecherwellen zueinander muss mindestens ein Zahnrad unter Zuhilfenahme von Krantechnik und Spezialwerkzeugen demontiert und nach der Korrektur der Winkellage wieder montiert werden.

Durch eine Synchronisation beider Antriebe und somit beider Brecherwellen im schnelllaufenden, gut zugänglichen Getriebebereich über zwei Synchronisierungs-Kegelradgetriebe ist der Aufwand zur nachträglichen Feineinstellung der Winkellage beider Brecherwellen zueinander sehr gering. Die vorliegende Erfindung erlaubt es, ohne aufwändige Demontage des Brechers die Winkellage der Brecherwellen zueinander nachträglich einzustellen und damit eine signifikante Verbesserung der Brechereffektivität zu erzielen.

Auch kann die Justierung der Winkellage der Walzen an der schnelllaufenden Getriebeseite erheblich genauer erfolgen als an der langsam laufenden Getriebeseite: Aufgrund der Übersetzung des Getriebes entspricht eine Umdrehung der Zwischenwelle nur einem Bruchteil einer Umdrehung einer Walze (je nach Übersetzung wenige Winkelgrad).

Durch die unkomplizierte nachträgliche und genaue Einstellbarkeit der Winkellage der beiden Brecherwellen zueinander kann die Brechereffektivität dem zu brechenden Material angepasst und optimiert werden.

Die Erfindung fügt zwei bestehenden Antriebssträngen eines Walzenbrechers einen mit den beiden Antriebssträngen drehfest gekoppelten Synchronisierungsstrang, umfassend eine schlupffreie Drehmomentübertragungsvorrichtung, und eine Überlastkupplung hinzu.

Eine Überlastkupplung, vorzugsweise eine definiert einstellbare Überlastkupplung, z.B. in Form einer Rutschkupplung, verhindert eine einseitige Getriebeüberlastung, d.h. eine Überlastung eines Zahnradgetriebes, welche sich durch eine undefinierte Drehmomentübertragung von einem ersten Antrieb zu dem anderen Antrieb ergeben kann. Die durch die Synchronisierung hervorgerufene maximale zusätzliche Belastung für ein einzelnes Zahnradgetriebe ist somit kalkulierbar. Die Überlastkupplung dient somit als Sicherheitskupplung, um undefinierte Lastzustände, die zu Schäden an dem Walzenbrecher führen können, auszuschließen.

Walzenbrecher, d.h. Brecher mit zwei rotierenden Walzen, dienen der Zerkleinerung vorzugsweise mineralischen Brechgutes, wie Gestein, Kohle oder Ölsand. Am Umfang der Brechwalzen können Brech- oder Schneidzähne angeordnet sein. Die Rotationsachsen der Brechwalzen liegen im Wesentlichen parallel zueinander, und in der Regel horizontal oder in etwa horizontal. Vorzugsweise besitzen direkt benachbarte Brechwalzen entgegengesetzte Drehrichtungen.

Vorteilhafte Ausgestaltungen und Weiterbildungen der Erfindung sind in den abhängigen Ansprüchen angegeben. Dabei kann das erfindungsgemäße Verfahren auch entsprechend den abhängigen Vorrichtungsansprüchen weitergebildet sein, und umgekehrt.

Gemäß einer bevorzugten Ausgestaltung der Erfindung umfasst die Drehmomentübertragungsvorrichtung zwei Synchronisierungs-Kegelradgetriebe mit je einer Eingangswelle und je einer Ausgangswelle. Dabei sind die Eingangswellen jeweils mit den Zwischenwellen drehfest verbunden. Die Ausgangswellen sind mittels einer Wellenverbindung, die einen Versatz der Ausgangswellen erlaubt, miteinander verbunden. Die Wellenverbindung, die einen Versatz der Ausgangswellen erlaubt, kann beispielsweise eine Gelenkwelle und/oder eine Ausgleichskupplung umfassen. Eine Gelenkwelle ist eine Welle, die durch ein oder mehr Gelenke in zwei oder mehr Wellenabschnitte unterteilt wird. Die Gelenke erlauben somit einen radialen, winkeligen oder auch einen axialen Versatz der Wellenabschnitte. Eine Ausgleichskupplung ist eine Kupplung. welche eine axiale und/oder radiale und/oder winklige Wellenverlagerung ausgleichen kann. Geeignete Ausgleichskupplungen sind z.B. eine Doppelzahnkupplung oder eine Federlamellenkupplung.

Gemäß einer bevorzugten Ausgestaltung der Erfindung umfasst die Drehmomentübertragungsvorrichtung eine Kette oder einen Zahnriemen, womit die Zwischenwellen miteinander verbunden sind. Ketten und Zahnriemen stellen eine schlupffreie Drehmomentübertragungsvorrichtung dar, die einen Versatz der antreibenden Welle und der angetriebenen Welle zueinander erlauben. In diesem Fall sind die antreibende Welle und die angetriebene Welle parallel zueinander. Die Überlastkupplung kann in diesem Fall z.B. zwischen einem Kettenritzel bzw. einer gezahnten Riemenscheibe und der entsprechenden tragenden Welle angeordnet sein.

Gemäß einer bevorzugten Ausgestaltung der Erfindung sind auf der Antriebswelle und der Zwischenwelle jeweils Zahnräder angeordnet, welche unmittelbar miteinander kämmen. Die durch die drehfeste Verbindung miteinander synchronisierten Zwischenwellen sind also Wellen, die im Zahnradgetriebe - in Richtung der Drehmomentübertragung gesehen - unmittelbar nach der Antriebswelle angeordnet sind. Da die Antriebswelle des Zahnradgetriebes mit der Drehzahl des Antriebsmotors rotiert, handelt es sich bei den unmittelbar nachgeschalteten Zwischenwellen ebenfalls um relativ schnell drehende Wellen.

Gemäß einer bevorzugten Ausgestaltung der Erfindung weisen die Zahnradgetriebe jeweils eine oder mehrere Antriebsstrang-Stirnradstufen und/oder Antriebsstrang-Kegelradstufen und/oder Antriebsstrang-Planetenradstufen auf. Durch den mehrfachen Zahneingriff einer Planetenstufe kann diese auf geringem Bauraum ein hohes Drehmoment übertragen. Damit kann bei einem vorgegebenen Brechwalzenabstand ein größtmögliches Drehmoment auf jede Brechwalze übertragen werden.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu
- Fig. 1: ein Getriebeschema einer erfindungsgemäßen Antriebsanordnung;
- Fig. 2: eine Seitenansicht eines Walzenbrechers mit einer erfindungsgemäßen Antriebsanordnung;
- Fig. 3: eine Draufsicht des in Fig. 2 gezeigten Walzenbrechers;
- Fig. 4: eine Detailansicht einer Gelenkwelle und einer Überlastkupplung; und
- Fig. 5: eine Draufsicht einer Wellensynchronisierung mittels eines Kettengetriebes bzw. eines Synchronriemens.

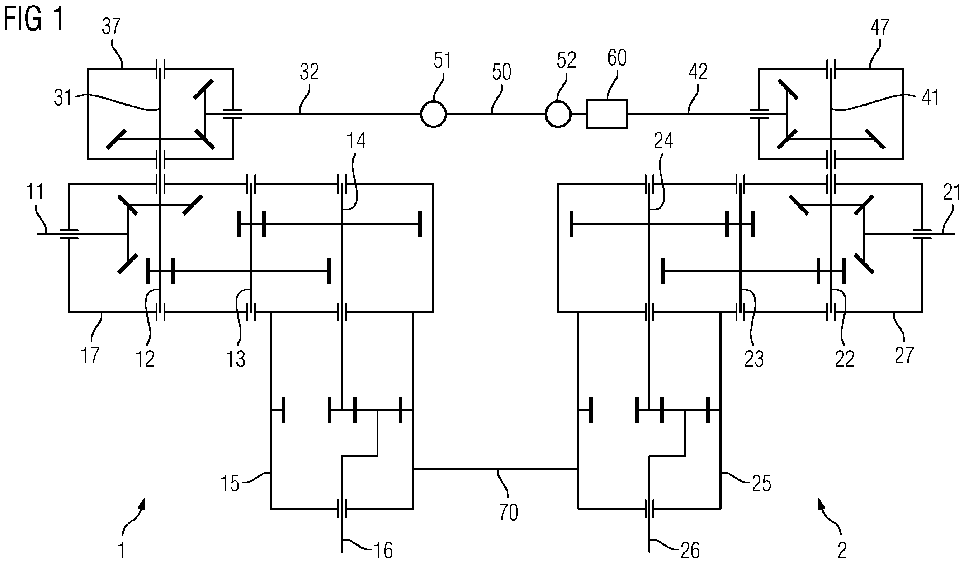

Fig. 1 zeigt ein Getriebeschema einer erfindungsgemäßen Antriebsanordnung mit einem ersten Antriebsstrang 1 und einem zweiten Antriebsstrang 2. Der erste und der zweite Antriebsstrang 1, 2 sind spiegelbildlich zueinander aufgebaut. Die beiden Antriebsstränge 1, 2 rufen gegensinnig orientierte Drehmomente hervor, die sie gegenseitig durch eine Abstützung 70 aufeinander abstützen. Jeder der beiden Antriebsstränge 1, 2 weist ein Antriebsstrang-Kegelradgetriebe 17, 27 auf, dem ein Planetengetriebe 15, 25 nachgeschaltet ist. Die Antriebsstrang-Kegelradgetriebe 17, 27 weisen jeweils eine Antriebswelle 11, 21 auf, die mit einem Motor, z.B. einem elektrischen oder einem hydraulischen Motor, drehfest verbindbar ist. Mit einem auf der Antriebswelle 11, 21 angeordneten ersten Zahnrad kämmt ein zweites Zahnrad, das auf einer ersten Zwischenwelle 12, 22 angeordnet ist. Anstatt der in Fig. 1 gezeigten Kegelradstufe der Antriebswelle 11, 21 könnte auch eine Stirnradstufe vorhanden sein. Die Rotation wird über weitere Zwischenwellen, vorliegend eine zweite und eine dritte Zwischenwelle 13, 14 bzw. 23, 24, in ein Planetengetriebe 15, 25, umfassend ein Sonnenrad, ein Hohlrad und mindestens ein mit dem Sonnen- und dem Hohlrad kämmendes Planetenrad, das in einem rotierbaren Planetenradträger gelagert ist, übertragen, das jeweils eine Abtriebswelle 16, 26 aufweist. Im vorliegenden Ausführungsbeispiel sind die Abtriebswellen 16, 26 durch die Planetenradträger der Planetengetriebe 15, 25 gebildet. Die Abtriebswellen 16, 26 sind mit Brecherwalzen des Walzenbrechers drehfest verbindbar.

Die ersten Zwischenwellen 12, 22 sind jeweils drehfest mit den Eingangswellen 31, 41 von Synchronisierungs-Kegelradgetrieben 37, 47 drehfest verbunden. Die beiden Ausgangswellen 32, 42 der Synchronisierungs-Kegelradgetriebe 37, 47 sind über eine Gelenkwelle 50 mit zwei Gelenken 51, 52 und eine Überlastkupplung 60 drehfest miteinander verbunden.

Durch die Kopplung der ersten Zwischenwellen 12, 22 der Zahnradgetriebe mithilfe der Synchronisierungs-Kegelradgetriebe 37, 47 und der Gelenkwelle 50 haben die beiden Antriebsstränge dieselbe Drehzahl.

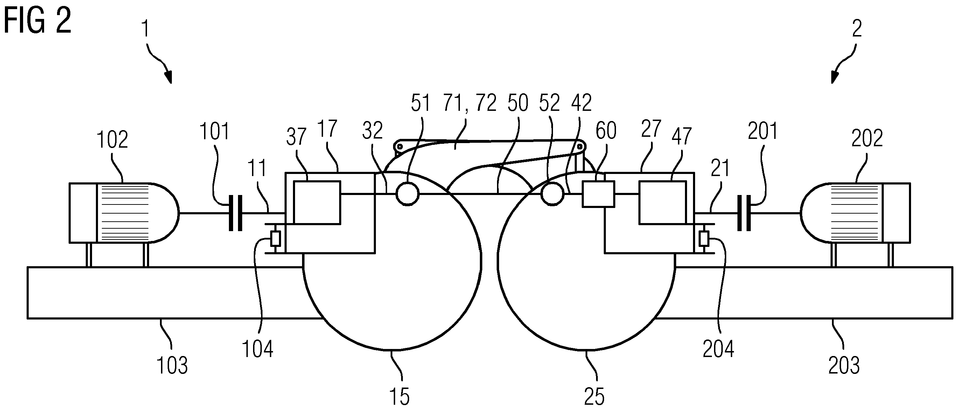

Fig. 2 zeigt eine Seitenansicht eines Walzenbrechers mit einer erfindungsgemäßen Antriebsanordnung. Die Antriebsanordnung umfasst zwei Antriebsstränge 1, 2, die gegensinnige Rotationen der Walzen des Walzenbrechers hervorrufen. Der erste

Antriebsstrang 1 weist ein Kegelradgetriebe 17 und ein nachgeschaltetes einstufiges Planetengetriebe 15 auf. Die Antriebswelle 11 des ersten Antriebsstrangs 1 ist über eine Kupplung 101 mit einem Antriebsmotor 102 gekoppelt, der auf einer Motorschwinge 103 angeordnet ist. Der zweite Antriebsstrang 2 ist analog ausgebildet: auch er weist ein Kegelradgetriebe 27 und ein nachgeschaltetes einstufiges Planetengetriebe 25 auf. Die Antriebswelle 21 des zweiten Antriebsstrangs 2 ist über eine Kupplung 201 mit einem Antriebsmotor 202 gekoppelt, der auf einer Motorschwinge 203 angeordnet ist. Jeweils eine erste Zwischenwelle der Kegelradgetriebe 17, 27 ist mit einer Eingangswelle von Synchronisierungs-Kegelradgetrieben 37, 47 verbunden. Zur Drehmomentabstützung ist jeweils eine Drehmomentstütze 104, 204 zwischen den Kegelradgetrieben 17, 27 des Antriebsstrangs und den Synchronisierungs-Kegelradgetrieben 37, 47 angeordnet. Die beiden Ausgangswellen 32, 42 der Synchronisierungs-Kegelradgetriebe 37, 47 sind mit einer Gelenkwelle 50 mit zwei Gelenken 51, 52 und einer Überlastkupplung 60 drehfest miteinander verbunden.

Zur Drehmomentabstützung ist jeweils eine Drehmomentstütze 71, 72 zwischen den Planetengetrieben 15, 25 angeordnet.

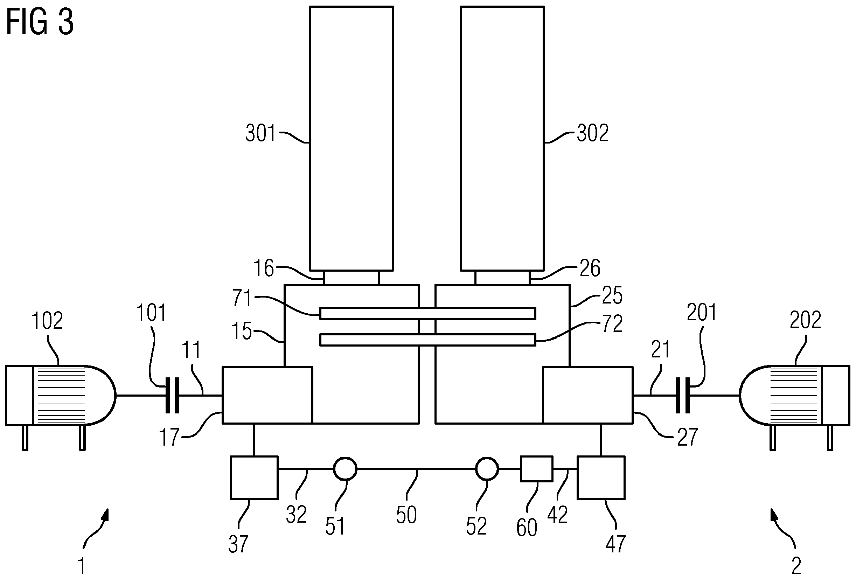

Fig. 3 zeigt eine Draufsicht des in Fig. 2 gezeigten Walzenbrechers. Dabei sind die beiden Drehmomentstützen 71, 72 zwischen den Planetengetrieben 15, 25 sowie die jeweils mit einer Abtriebswelle 16, 26 eines der beiden Antriebsstränge 1, 2 verbundenen Walzen 301, 302 des Walzenbrechers deutlich erkennbar.

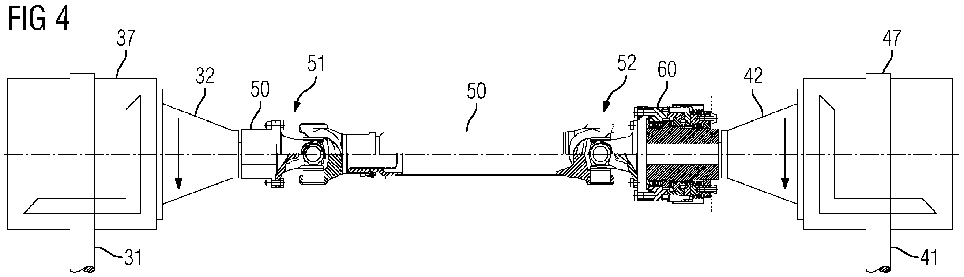

Fig. 4 gibt eine Detailansicht einer Gelenkwelle 50 und einer Überlastkupplung 60 wieder, die die Ausgangswellen eines ersten 37 und eines zweiten 47 Synchronisierungs-Kegelradgetriebes drehfest miteinander verbinden. Durch die beiden Gelenke 51, 52 der Gelenkwelle 50 kann ein während des Betriebes des Walzenbrechers auftretender Versatz - radial und/oder winkelig, in einem gewissen Maß auch ein axialer Versatz - der Ausgangswellen 32, 42 der Synchronisierungs-Kegelradgetriebe 37, 47 ausgeglichen werden.

Die Überlastkupplung 60 ist so eingestellt, dass sie ein für die Synchronisierung der beiden Antriebsstränge erforderliches Drehmoment überträgt und sich erst löst, z.B. durch Rutschen, falls ein übermäßiges Drehmoment anliegt, welches einen Getriebeschaden hervorrufen würde.

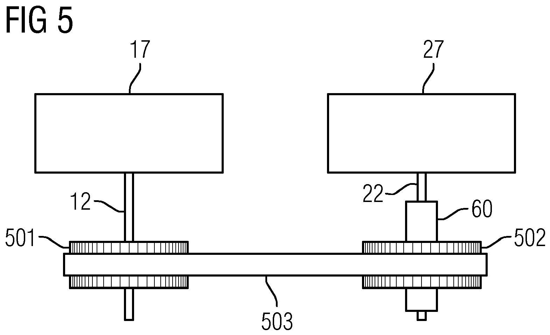

Fig. 5 zeigt eine Draufsicht einer Wellensynchronisierung mittels eines Kettengetriebes bzw. eines Synchronriemens. Jeder Antriebsstrang zum Antrieb einer der beiden Walzen eines Walzenbrechers weist ein Antriebsstrang-Kegelradgetriebe 17, 27 auf. Einander entsprechende Zwischenwellen 12, 22 der Antriebsstrang-Kegelradgetriebe 17, 27 sind über die Getriebegehäuse hinaus verlängert und tragen jeweils ein erstes und ein zweites Kettenrad 501, 502. Dabei sind beide Kettenräder 501, 502 mithilfe einer Kette 503 drehfest miteinander verbunden. Die Überlastkupplung 60 sitzt in diesem Fall auf einer der beiden Zwischenwellen 12, 22, hier: auf der zweiten Zwischenwelle 22, und trägt das zweite Kettenrad 502. Im Fall einer Überlast kann so das zweite Kettenrad 502 auf der zweiten Zwischenwelle 22 rutschen. Gegenüber der in Fig. 1 beschriebenen Synchronisierung mittels Kegelradgetrieben verzichtet die Kettengetriebe-Synchronisierung auf eine Umlenkung des Drehmoments um 90 Grad mithilfe von Kegelrädern; stattdessen erfolgt die Synchronisierung unmittelbar über die achsparallelen Zwischenwellen 12, 22.

Eine analoge Synchronisierung der beiden Zwischenwellen 12, 22 kann auch anstatt eines Kettengetriebes mit einem Synchronriemen, d.h. gezahnten Riemenscheiben und einem Zahnriemen, erfolgen. In dieser Ausführungsoption entsprächen die Bezugszeichen 501, 502 den gezahnten Riemenscheiben und das Bezugszeichen 503 dem Zahnriemen.

## Patentansprüche

1. Antriebsanordnung für einen Walzenbrecher mit zwei parallel angeordneten Walzen (301, 302), umfassend zwei Antriebsstränge (1, 2) zum Antrieb je einer Walze (301, 302), wobei die Antriebsstränge (1, 2) jeweils ein Zahnradgetriebe (15, 17, 25, 27), umfassend eine mit einem Motor (102, 202) verbindbare Antriebswelle (11, 21) und eine mit einer Walze (301, 302) verbindbare Abtriebswelle (16, 26), aufweisen, wobei die Zahnradgetriebe (15, 17, 25, 27) jeweils eine zwischen der Antriebswelle (11, 21) und der Abtriebswelle (16, 26) angeordnete Zwischenwelle (12, 22) aufweisen,
**dadurch gekennzeichnet, dass** die Zwischenwellen (12, 22) mit einer schlupffreien Drehmomentübertragungsvorrichtung (37, 47, 50), welche einen Versatz der Zahnradgetriebe (15, 17, 25, 27) zueinander erlaubt, in Kombination mit einer Überlastkupplung (60), welche bei Überschreitung eines einstellbaren Drehmoments die drehfeste Verbindung der Zwischenwellen (12, 22) unterbricht, miteinander verbunden sind.

2. Antriebsanordnung nach Anspruch 1, wobei die Drehmomentübertragungsvorrichtung (37, 47, 50) zwei Synchronisierungs-Kegelradgetriebe (37, 47) mit je einer Eingangswelle (31, 41) und je einer Ausgangswelle (32, 42) umfasst, wobei die Eingangswellen (31, 41) jeweils mit den Zwischenwellen (12, 22) drehfest verbunden sind und die Ausgangswellen (32, 42) mittels einer Wellenverbindung, die einen Versatz der Ausgangswellen (32, 42) erlaubt, miteinander verbunden sind.

3. Antriebsanordnung nach Anspruch 2, wobei die Wellenverbindung, die einen Versatz der Ausgangswellen (32, 42) erlaubt, eine Gelenkwelle (50, 51, 52) und/oder eine Ausgleichskupplung umfasst.

4. Antriebsanordnung nach Anspruch 1, wobei die Drehmomentübertragungsvorrichtung (37, 47, 50) eine Kette oder einen Zahnriemen umfasst, womit die Zwischenwellen (12, 22) miteinander verbunden sind.

5. Antriebsanordnung nach einem der vorhergehenden Ansprüche, wobei auf der Antriebswelle (11, 21) und der Zwischenwelle (12, 22) jeweils Zahnräder angeordnet sind, welche unmittelbar miteinander kämmen.

6. Antriebsanordnung nach einem der vorhergehenden Ansprüche, wobei die Zahnradgetriebe (15, 17, 25, 27) jeweils eine oder mehrere Antriebsstrang-Stirnradstufen und/oder Antriebsstrang-Kegelradstufen (12, 13, 14, 22, 23, 24) und/oder Antriebsstrang-Planetenradstufen (15, 25) aufweisen.

7. Verfahren zum Synchronisieren einer Walzenrotation eines Walzenbrechers mit zwei parallel angeordneten Walzen (301, 302) und einer Antriebsanordnung nach einem der vorhergehenden Ansprüche,
wobei das Verfahren folgende Schritte umfasst:
- Lösen der drehfesten Verbindung der Zwischenwellen (12, 22);
- Drehen mindestens einer der Zwischenwellen (12, 22), bis eine definierte Winkellage der Walzen (301, 302) erreicht ist; und
- Wiederherstellen der drehfesten Verbindung der Zwischenwellen (12, 22).

## Claims

1. Drive assembly for a roll crusher comprising two rollers (301, 302) arranged in parallel comprising two drive trains (1, 2) each for driving a roller (301, 302), wherein the drive trains (1, 2) each have a gear transmission (15, 17, 25, 27), comprising a drive shaft (11, 21) which can connect to a motor (102, 202) and an output shaft (16, 26) which can connect to a roller (301, 302), wherein each gear transmission (15, 17, 25, 27) comprises an intermediate shaft (12, 22) arranged between the drive shaft (11, 21) and the output shaft (16, 26), **characterised in that** the intermediate shafts (12, 22) are connected to each other with a slip-free torque transmission device (37, 47, 50), which allows an offset of the gear transmission (15, 17, 25, 27) in relation to each other, in combination with an overload clutch (60), which terminates the connection for conjoint rotation of the intermediate shafts (12, 22) when an adjustable torque is exceeded.

2. Drive assembly according to claim 1, wherein the torque transmission device (37, 47, 50) comprises two synchronising bevel gears (37, 47) each with an input shaft (31, 41) and each with an output shaft (32, 42), wherein the input shafts (31, 41) are each connected to the intermediate shafts (12, 22) for conjoint rotation and the output shafts (32, 42) are connected to each other by means of a shaft connection allowing an offset of the output shafts (32, 42).

3. Drive assembly according to claim 2, wherein the shaft connection, which allows an offset of the output shafts (32, 42), comprises an articulated shaft (50, 51, 52) and/or a compensating clutch.

4. Drive assembly according to claim 1, wherein the torque transmission device (37, 47, 50) comprises a chain or a toothed belt by means of which the intermediate shafts (12, 22) are connected to each other.

5. Drive assembly according to one of the preceding claims, wherein in each case gear wheels are arranged on the drive shaft (11, 21) and the intermediate shaft (12, 22) wherein said gear wheels mesh directly with each other.

6. Drive assembly according to one of the preceding claims, wherein the gear transmissions (15, 17, 25, 27) each comprise one or more drive train spur gear stages and/or drive train bevel gear stages (12, 13, 14, 22, 23, 24) and/or drive train planetary gear stages (15, 25).

7. Method for synchronising the roller rotation of a roll crusher comprising two rollers (301, 302) arranged in parallel and a drive assembly according to one of the preceding claims, wherein the method comprises the following steps:
- releasing the connection for conjoint rotation of the intermediate shafts (12, 22);
- rotation of at least one of the intermediate shafts (12, 22) until a defined angular position of the rollers (301, 302) is achieved; and
- restoration of the connection for conjoint rotation of the intermediate shafts (12, 22).

## Revendications

1. Dispositif d'entraînement pour un broyeur à rouleaux ayant deux rouleaux (301, 302) disposés parallèlement, comprenant deux chaînes (1, 2) cinématiques entraînant chacune un rouleau (301, 302), les chaînes (1, 2) cinématiques ayant chacune une transmission (15, 17, 25, 27) par engrenage, comprenant un arbre (11, 12) menant pouvant être relié à un moteur (102, 202) un arbre (16, 26) mené pouvant être relié à un rouleau (301, 302), les transmissions (15, 17, 25, 27) par engrenage ayant chacune un arbre (12, 22) intermédiaire disposé entre l'arbre (11, 21) menant et l'arbre (16, 26) mené,
**caractérisé en ce que** les arbres (12, 22) intermédiaires sont reliés entre eux par un dispositif (37, 47, 50) de transmission de couple sans glissement, qui permet un décalage des transmissions (15, 17, 25, 27) à engrenage l'une par rapport à l'autre, en combinaison avec un accouplement (60) de surcharge, qui interrompt, si un couple réglable est dépassé, la solidarisation en rotation des arbres (12, 22) intermédiaires.

2. Agencement d'entraînement suivant la revendication 1, dans lequel le dispositif (37, 47, 50) de transmission de couple comprend deux transmissions (37, 47) à roue conique de synchronisation, ayant chacune un arbre (31, 41) d'entrée et un arbre (32, 42) de sortie, les arbre (31, 41) d'entrée étant respectivement solidaires en rotation des arbres (12, 22) intermédiaires et les arbres (32, 42) de sortie étant reliés l'un à l'autre au moyen d'une liaison d'arbre, qui permet un décalage des arbres (32, 42) de sortie.

3. Agencement d'entraînement suivant la revendication 2, dans lequel la liaison d'arbre, qui permet un décalage des arbres (32, 42) de sortie, comprend un arbre (50, 51, 52) articulé et/ou un accouplement de compensation.

4. Agencement d'entraînement suivant la revendication 1, dans lequel le dispositif (37, 47, 50) de transmission de couple comprend une chaîne ou une courroie dentée, par laquelle les arbres (12, 22) intermédiaires sont reliés entre eux.

5. Agencement d'entraînement suivant l'une des revendications précédentes, dans lequel, sur l'arbre (11, 21) d'entraînement et l'arbre (12, 22) intermédiaire sont montées respectivement des roues dentées, qui engrènent directement entre elles.

6. Agencement d'entraînement suivant l'une des revendications précédentes, dans lequel les transmissions (15, 17, 25, 27) à engrenage ont respectivement un ou plusieurs étages à roue droite de chaîne cinématique et/ou étages (12, 13, 14, 22, 23, 24) à roue conique de chaîne cinématique et/ou étages (15, 25) de roue satellite de chaîne cinématique.

7. Procédé de synchronisation de la rotation des rouleaux d'un broyeur à rouleaux ayant deux rouleaux (301, 302) disposés parallèlement et un agencement d'entraînement suivant l'une des revendications précédentes,
dans lequel le procédé comprend les stades suivants :
- on fait cesser la solidarisation en rotation des arbres (12, 22) intermédiaires ;
- on fait tourner au moins l'un des arbres (12, 22) intermédiaires jusqu'à atteindre une position angulaire définie des rouleaux (301, 302) et
- on rétablit la solidarisation en rotation des arbres (12, 22) intermédiaires.
